# EUROPÄISCHE PATENTSCHRIFT

(11) **EP 0 720 691 B1**
(45) Veröffentlichungstag und Bekanntmachung des Hinweises auf die Patenterteilung: **20.01.1999**
(21) Anmeldenummer: 95923177.0
(22) Anmeldetag: 27.06.1995
(51) Int. Cl.: F02M 51/06, F02M 61/16, F16K 31/06

(54) **VENTILNADEL FÜR EIN ELEKTROMAGNETISCH BETÄTIGBARES VENTIL UND VERFAHREN ZUR HERSTELLUNG**
VALVE NEEDLE FOR AN ELECTROMAGNETIC VALVE AND METHOD OF PRODUCING THE SAME
POINTEAU POUR SOUPAPE A ACTIONNEMENT ELECTROMAGNETIQUE ET SON PROCEDE DE PRODUCTION

(30) Priorität: 22.07.1994 DE 4426006
(43) Veröffentlichungstag der Anmeldung: 10.07.1996
(73) Patentinhaber: ROBERT BOSCH GMBH, 70442 Stuttgart (DE)
(72) Erfinder: REITER, Ferdinand, D-71706 Markgröningen (DE); SEFZ, Werner, D-97514 Oberaurach (DE); DORSCH, Ludwig, D-96050 Bamberg (DE)
(86) Internationale Anmeldenummer: DE9500825
(87) Internationale Veröffentlichungsnummer: WO9603579

(56) Entgegenhaltungen:
- EP-A- 0 352 445
- EP-A- 0 595 014
- WO-A-94/15092
- DE-C- 4 230 376

## Beschreibung

### Stand der Technik

Die Erfindung geht aus von einer Ventilnadel für ein elektromagnetisch betätigbares Ventil bzw. von einem Verfahren zur Herstellung einer Ventilnadel nach der Gattung des Anspruchs 1 bzw. des Anspruchs 8. Aus der DE-OS 40 08 675 ist bereits eine Ventilnadel für ein elektromagnetisch betätigbares Ventil bekannt, die aus einem Anker, einem Ventilschließglied und einem den Anker mit dem z. B. kugelförmigen Ventilschließglied verbindenden rohrförmigen Verbindungsteil besteht. Die aufgezählten Teile stellen getrennt voneinander gefertigte Einzelteile dar, die erst mittels Fügeverfahren, z. B. durch Laserschweißen, miteinander verbunden werden. Es liegen also mindestens zwei Verbindungsstellen vor. Der Anker umgreift dabei das Verbindungsteil vollständig radial und zumindest teilweise axial, da das Verbindungsteil in einer durchgehenden Längsöffnung des Ankers befestigt ist. Das Verbindungsteil weist selbst auch eine durchgehende innere Längsöffnung auf, in der Brennstoff in Richtung zum Ventilschließglied strömen kann, der dann nahe des Ventilschließglieds durch in der Wandung des Verbindungsteils eingebrachte, radial verlaufende Queröffnungen austritt. Der Brennstofffluß erfolgt also zuerst im Inneren der Ventilnadel und verläßt die Ventilnadel erst zum Ventilsitz hin.

Des weiteren ist aus der DE-PS 42 30 376 bekannt, eine Ventilnadel für ein elektromagnetisch betätigbares Ventil aus einem einteiligen, aus einem Ankerabschnitt und einem Ventilhülsenabschnitt bestehenden rohrförmigen Betätigungsteil durch Spritzgießen und anschließendes Sintern nach dem Metal-Injection-Molding-Verfahren (MIM) herzustellen. Anschließend wird das Betätigungsteil mittels einer Schweißverbindung mit einem Ventilschließgliedabschnitt verbunden. Im Ankerabschnitt und Ventilhülsenabschnitt ist dabei eine durchgehende innere Längsöffnung vorgesehen, in der Brennstoff in Richtung zum Ventilschließgliedabschnitt strömen kann, der dann nahe des Ventilschließgliedabschnittes durch Queröffnungen aus dem Ventilhülsenabschnitt austritt. Bei der Fertigung der Ventilnadel mit dem sogenannten MIM-Verfahren sind also Schieberwerkzeuge nötig, um die Queröffnungen auszubilden. Aus der EP-A- 595 014 ist es bekannt ein Schließelement eines elektromagnetisch betätigten Ventils durch Tiefziehen herzustellen. Es handelt sich dabei um eine Schließkappe, die auf einem Ventilstößel verschiebbar ist.

### Vorteile der Erfindung

Die erfindungsgemäße Ventilnadel mit den kennzeichnenden Merkmalen des Anspruchs 1 bzw. das erfindungsgemäße Verfahren mit den kennzeichnenden Merkmalen des Anspruchs 8 haben demgegenüber den Vorteil, daß eine solche Ventilnadel auf einfache und kostengünstige Art und Weise herstellbar ist. Dies wird erfindungsgemäß dadurch erreicht, daß das Verbindungsteil als Ventilnadelabschnitt einteilig mit dem Ventilschließgliedabschnitt mittels eines Tiefziehverfahrens ausgebildet ist und so das Werkzeug zur Herstellung des aus Ventilnadelabschnitt und Ventilschließgliedabschnitt bestehenden Tiefziehteils einfach aufgebaut sein kann. Querschieberwerkzeuge zur Erzeugung von Queröffnungen im Ventilnadelabschnitt sind nicht nötig, da der Brennstofffluß außerhalb des Ventilnadelabschnitts erfolgt.

Vorteilhaft ist beim Tiefziehen, daß als Ausgangsmaterial ein vergleichsweise einfacher ebener Rohling aus einem geeignetem Tiefziehblech verwendet werden kann.

Durch die in den Unteransprüchen aufgeführten Maßnahmen sind vorteilhafte Weiterbildungen und Verbesserungen der im Anspruch 1 angegebenen Ventilnadel bzw. des im Anspruch 8 angegebenen Verfahrens zur Herstellung möglich.

Das Tiefziehteil ist in einer inneren Durchgangsöffnung eines Ankers eingeschoben und mit diesem z. B. durch Schweißnähte fest verbunden. Die Ventilnadel ist also nur noch zweiteilig ausgebildet.

Beispielsweise zwei axial verlaufende Strömungskanäle im Inneren des Ankers sorgen für ein ungehindertes Strömen des Brennstoffs in Richtung des Ventilsitzes. Der aus den Strömungskanälen austretende Brennstoff kann am äußeren Umfang des Ventilnadelabschnitts ohne Umlenkungen entlang strömen.

Von Vorteil ist es, daß im Ventilnadelabschnitt vorgesehene Sicken, durch die die Strömungskanäle im Inneren des Ankers entstehen, gratfrei herstellbar sind, so daß im Gegensatz zu bisher bekannten fertigungsbedingt gratbehafteten Queröffnungen keine Nachbearbeitung erfolgen muß. Außerdem ist es besonders vorteilhaft, daß sich im Brennstoff mitgeführte Partikel bzw. eingespülter Schmutz im becherförmigen Tiefziehteil absetzen können und damit Undichtheiten durch Verstopfungen am Ventilsitz vermieden werden.

### Zeichnung

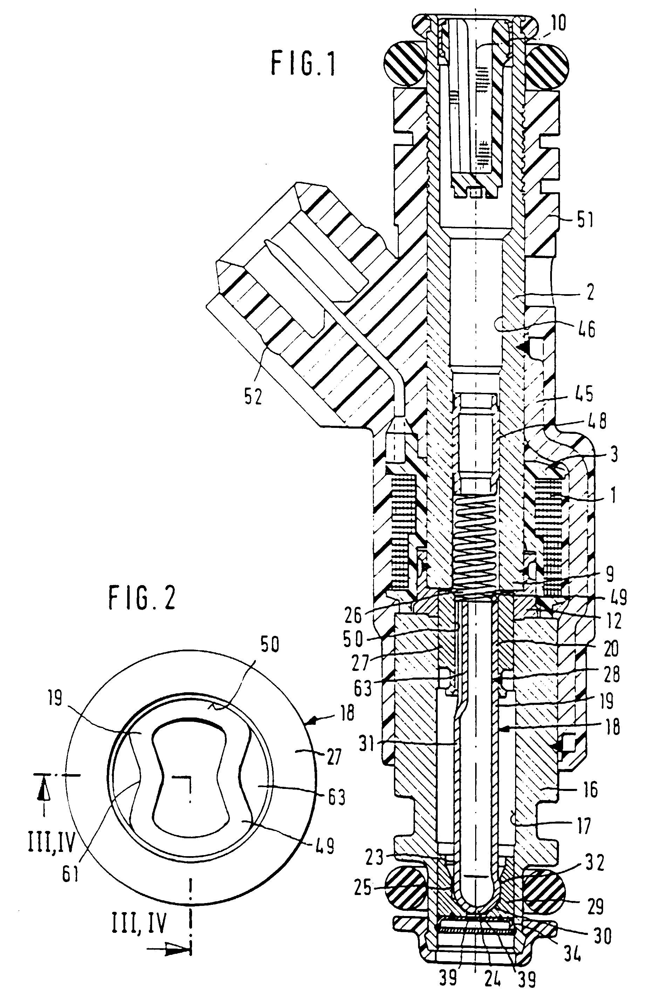

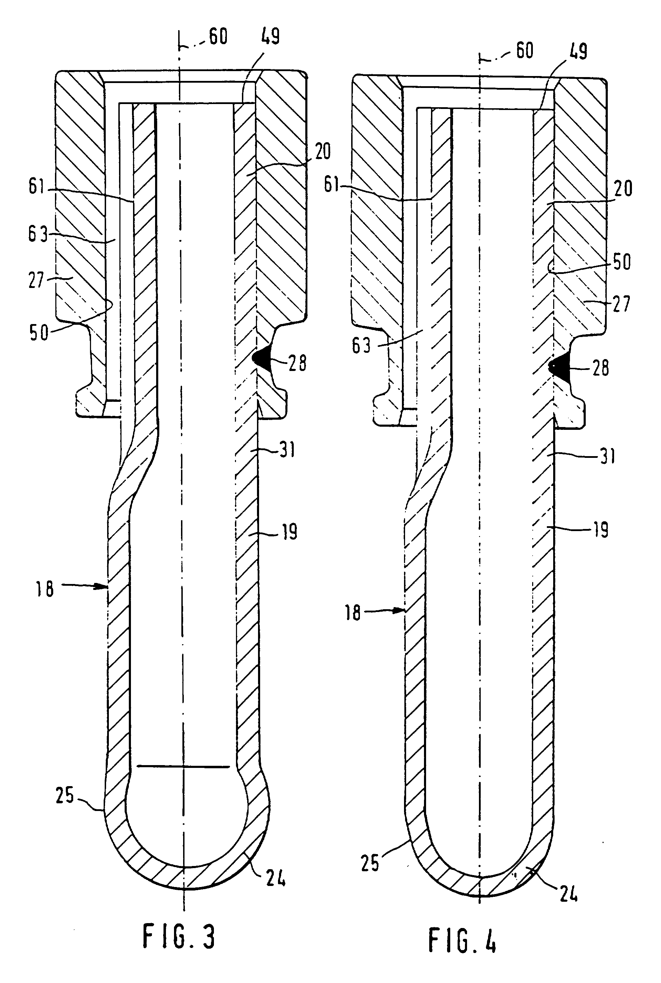

Ausführungsbeispiele der Erfindung sind in der Zeichnung vereinfacht dargestellt und in der nachfolgenden Beschreibung näher erläutert. Es zeigen Figur 1 ein Brennstoffeinspritzventil mit einer erfindungsgemäßen Ventilnadel, Figur 2 eine Draufsicht auf eine Ventilnadel und Figur 3 bzw. Figur 4 zwei Ventilnadeln als Schnittdarstellungen entlang der Linie III-III bzw. IV-IV in Figur 2.

### Beschreibung der Ausführungsbeispiele

Das in der Figur 1 beispielsweise dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 umgebenen, als Brennstoffeinlaßstutzen dienenden rohrförmigen Kern 2, der beispielsweise über seine gesamte Länge einen konstanten Außendurchmesser aufweist. Ein in radialer Richtung gestufter Spulenkörper 3 nimmt eine Bewicklung der Magnetspule 1 auf und ermöglicht in Verbindung mit dem Kern 2 einen kompakten Aufbau des Einspritzventils im Bereich der Magnetspule 1.

Mit einem unteren Kernende 9 des Kerns 2 ist konzentrisch zu einer Ventillängsachse 10 dicht ein rohrförmiges metallenes Zwischenteil 12 beispielsweise durch Schweißen verbunden und umgibt das Kernende 9 teilweise axial. Stromabwärts des Spulenkörpers 3 und des Zwischenteils 12 erstreckt sich ein rohrförmiger Ventilsitzträger 16, der beispielsweise fest mit dem Zwischenteil 12 verbunden ist. In dem Ventilsitzträger 16 verläuft eine Längsbohrung 17, die konzentrisch zu der Ventillängsachse 10 ausgebildet ist. In der Längsbohrung 17 ist eine erfindungsgemäße Ventilnadel 18 mit einem tiefgezogenen rohrförmigen Ventilnadelabschnitt 19 angeordnet. Am stromabwärtigen Ende 23 des Ventilnadelabschnitts 19 ist ein zumindest eine teilweise kugelförmige Außenkontur aufweisender, einteilig mit dem Ventilnadelabschnitt 19 ausgeführter Ventilschließgliedabschnitt 24 vorgesehen, an dessen Umfang beispielsweise fünf Abflachungen 25 zum Vorbeiströmen des Brennstoffs vorgesehen sind.

Die Betätigung des Einspritzventils erfolgt in bekannter Weise elektromagnetisch. Zur axialen Bewegung der Ventilnadel 18 und damit zum Öffnen entgegen der Federkraft einer Rückstellfeder 26 bzw. zum Schließen des Einspritzventils dient der elektromagnetische Kreis mit der Magnetspule 1, dem Kern 2 und einem Anker 27. Der rohrförmige Anker 27 ist mit einem dem Ventilschließgliedabschnitt 24 abgewandten Ende 20 des in den Anker 27 eingeschobenen Ventilnadelabschnitts 19 durch beispielsweise zwei Schweißnähte 28 fest verbunden und auf den Kern 2 ausgerichtet. Der Anker 27 bildet zusammen mit dem Tiefziehteil 31 aus Ventilnadelabschnitt 19 und stromabwärtig ausgeformtem Ventilschließgliedabschnitt 24 die als Betätigungsteil dienende Ventilnadel 18.

In das stromabwärts liegende, dem Kern 2 abgewandte Ende des Ventilsitzträgers 16 ist in der Längsbohrung 17 ein zylinderförmiger Ventilsitzkörper 29, der einen festen Ventilsitz 30 aufweist, durch Schweißen dicht montiert. Zur Führung des Ventilschließgliedabschnitts 24 während der Axialbewegung der Ventilnadel 18 entlang der Ventillängsachse 10 dient eine Führungsöffnung 32 des Ventilsitzkörpers 29. Der eine kugelförmige Außenkontur aufweisende Ventilschließgliedabschnitt 24 der Ventilnadel 18 wirkt mit dem sich in Strömungsrichtung kegelstumpfförmig verjüngenden Ventilsitz 30 des Ventilsitzkörpers 29 zusammen. An seiner dem Ventilschließgliedabschnitt 24 abgewandten Stirnseite ist der Ventilsitzkörper 29 mit einer beispielsweise topfförmig ausgebildeten Spritzlochscheibe 34 fest und dicht durch eine z. B. mittels eines Lasers ausgebildete Schweißnaht verbunden. In der Spritzlochscheibe 34 sind wenigstens eine, beispielsweise vier durch Erodieren oder Stanzen ausgeformte Abspritzöffnungen 39 vorgesehen.

Die Einschubtiefe des Ventilsitzkörpers 29 mit der Spritzlochscheibe 34 bestimmt die Größe des Hubs der Ventilnadel 18. Dabei ist die eine Endstellung der Ventilnadel 18 bei nicht erregter Magnetspule 1 durch die Anlage des Ventilschließgliedabschnitts 24 am Ventilsitz 30 des Ventilsitzkörpers 29 festgelegt, während sich die andere Endstellung der Ventilnadel 18 bei erregter Magnetspule 1 durch die Anlage des Ankers 27 am Kernende 9 ergibt.

Die Magnetspule 1 ist von wenigstens einem, beispielsweise als Bügel ausgebildeten und als ferromagnetisches Element dienenden Leitelement 45 umgeben, das die Magnetspule 1 in Umfangsrichtung wenigstens teilweise umgibt sowie mit seinem einen Ende an dem Kern 2 und seinem anderen Ende an dem Ventilsitzträger 16 anliegt und mit diesem z. B. durch Schweißen, Löten bzw. Kleben verbindbar ist. Eine in eine konzentrisch zur Ventillängsachse 10 verlaufende Strömungsbohrung 46 des Kerns 2 eingeschobene Einstellhülse 48 dient zur Einstellung der Federvorspannung der an der Einstellhülse 48 anliegenden Rückstellfeder 26, die sich wiederum mit ihrer gegenüberliegenden Seite an einer stromaufwärtigen Stirnseite 49 des Ventilnadelabschnitts 19 in einer inneren Durchgangsöffnung 50 des rohrförmigen Ankers 27 abstützt.

Das Einspritzventil ist weitgehend mit einer Kunststoffumspritzung 51 umschlossen, die sich vom Kern 2 ausgehend in axialer Richtung über die Magnetspule 1 und das wenigstens eine Leitelement 45 bis zum Ventilsitzträger 16 erstreckt, wobei das wenigstens eine Leitelement 45 vollständig axial und in Umfangsrichtung überdeckt ist. Zu dieser Kunststoffumspritzung 51 gehört beispielsweise ein mitangespritzter elektrischer Anschlußstecker 52.

Eine Ventilnadel 18 gemäß dem in der Figur 1 dargestellten Ausführungsbeispiel ist in der Figur 2 in der Draufsicht nochmals gezeigt. Die Figuren 3 und 4 sind Schnittdarstellungen entlang der Linie III-III bzw. IV-IV in Figur 2 und zeigen zwei Ausführungsbeispiele von Ventilnadeln 18, die sich nur im Bereich der Ventilschließgliedabschnitte 24 voneinander unterscheiden. Anhand dieser drei Figuren soll nachfolgend der Aufbau der Ventilnadel 18 bzw. das Verfahren zu ihrer Herstellung näher erläutert werden.

In einem ersten Verfahrensschritt wird ein ebener Rohling aus einem geeigneten Tiefziehblech, das beispielsweise aus austenitischem oder ferritischem Stahl besteht, in ein becherförmiges Teil umgeformt. Bei diesem Verfahren handelt es sich um das Tiefziehen, einem translatorischen Zugdruckumformverfahren. Das Tiefziehen eignet sich besonders, so wie im vorliegenden Fall, zum Kaltumformen von einseitig offenen und rotationssymmetrischen Hohlteilen mit konstanter Wandstärke. Entsprechend der Ausbildung des Tiefziehwerkzeugs (Matrize, Stempel) kann das becherförmige Tiefziehteil 31 aus Ventilnadelabschnitt 19 und Ventilschließgliedabschnitt 24 bereits in eine sehr genaue Form und Größe gebracht werden. Das in der Figur 4 dargestellte Tiefziehteil 31 ist dabei einfacher als das in der Figur 3 gezeigte Tiefziehteil 31 durch Tiefziehen herstellbar, da es einen konstanten Innendurchmesser bis zum eine z. B. Halbkugelschalenform besitzenden Ventilschließgliedabschnitt 24 aufweist. Dagegen wird das in der Figur 3 dargestellte Tiefziehteil 31 so tiefgezogen, daß im Bereich des Ventilschließgliedabschnitts 24 eine Vergrößerung des Innendurchmessers des Ventilnadelabschnitts 19 und damit auch eine Vergrößerung des Außendurchmessers auftritt, wodurch die Außenkontur des Ventilschließgliedabschnitts 24 räumlich mehr als eine Halbkugel darstellt.

In einem folgenden Verfahrensschritt werden an dem Tiefziehteil 31 im Bereich des Ventilschließgliedabschnitts 24 an dessen Außenkontur beispielsweise fünf zueinander im gleichen Abstand angeordnete Abflachungen 25 vorgesehen, die das Vorbeiströmen des Brennstoffs in der Führungsöffnung 32 des Ventilsitzkörpers 29 bis zum Ventilsitz 30 erleichtern. Diese Abflachungen 25 erstrecken sich mindestens bis zum größten Querschnitt des Ventilschließgliedabschnitts 24, wodurch erst eine Brennstoffströmung zustande kommen kann, und reichen nicht bis zur Berührungsebene des Ventilschließgliedabschnitts 24 an dem Ventilsitz 30. Das Anformen dieser Abflachungen 25 erfolgt z. B. durch Anstauchen oder Prägen. Bei diesen Verfahren handelt es sich um translatorische Druckumformverfahren, bei denen sich also im wesentlichen das Werkzeug linear bewegt. Im konkreten Fall erfolgt durch weitgehend radial wirkende Prägekräfte eine geringe Werkstoffverdrängung in Richtung zu einer Tiefziehteillängsachse 60 hin, die im eingebauten Zustand der Ventilnadel 18 mit der Ventillängsachse 10 zusammenfällt.

Nachfolgend wird der Ventilnadelabschnitt 19 an seinem dem Ventilschließgliedabschnitt 24 abgewandten Ende 20, das später in der inneren Durchgangsöffnung 50 des Ankers 27 befestigt ist, mit beispielsweise zwei axial verlaufenden V-förmigen Sicken 61 versehen. Diese Sicken 61 werden z. B. auch durch Prägen gratfrei angeformt, und zwar mit wenigstens einer solchen Länge, daß sie stromabwärts aus dem später angebrachten Anker 27 herausragen. Im eingebauten Zustand des Tiefziehteils 31 im Anker 27 stellen die Sicken 61 Strömungskanäle 63 dar, die von der inneren Wandung des Ankers 27 und der Kontur der Sicken 61 des Ventilnadelabschnitts 19 begrenzt werden. Der Brennstoff gelangt somit von der Strömungsbohrung 46 im Kern 2 kommend bis zum Anker 27 und tritt in dessen innere Durchgangsöffnung 50 ein bis zur Stirnseite 49 des Ventilnadelabschnitts 19. Zum einen strömt Brennstoff zumindest bei der unmittelbaren Inbetriebnahme in das Innere des becherförmigen Tiefziehteils 31 und hauptsächlich in die beiden an der Stirnseite 49 beginnenden Strömungskanäle 63, durch die der Brennstoff nun durchgeleitet wird. Im Bereich des dem Ventilschließgliedabschnitt 24 zugewandten Endes des Ankers 27 tritt der Brennstoff wieder aus den Strömungskanälen 63 aus und strömt zumindest teilweise als Wandfilm des Tiefziehteils 31 bis zum Ventilsitz 30. Ohne Längsschlitze oder Queröffnungen im Ventilnadelabschnitt 19 wird der Brennstofffluß bis zum Ventilsitz 30 also vollständig gewährleistet. Die beiden zuletzt beschriebenen Verfahrensschritte können durchaus auch in umgekehrter zeitlicher Reihenfolge, also zuerst Sicken 61 anformen und dann Abflachungen 25 anbringen, oder zeitgleich vollzogen werden.

In einem nächsten Verfahrensschritt wird eine Oberflächenbehandlung des Ventilschließgliedabschnitts 24 vorgenommen. Diese Oberflächenbehandlung kann z. B. so aussehen, daß eine Hartstoffbeschichtung mit einer dünnen, verschleißfesten Hartchromschicht erfolgt. Weitere ideale Beschichtungswerkstoffe sind z. B. Titankarbid, Titannitrid oder Wolframkarbid. Für das Aufbringen der Beschichtung durch feine Ablagerung der Hartstoffe aus der Gasphase haben sich Dampfabscheidungsverfahren wie die sogenannten CVD (chemical vapour deposition)- bzw. PVD (physical vapour deposition) -Verfahren durchgesetzt. Eine entsprechende Feinbearbeitung (z.B. Läppen) des eine teilweise kugelförmige Außenkontur aufweisenden Ventilschließgliedabschnitts 24 muß dann noch erfolgen, wenn die Oberflächengüte noch nicht die an ein Ventilschließglied gestellte Qualität aufweist.

Daran schließt sich ein letzter Verfahrensschritt zur Herstellung der Ventilnadel 18 an. Das Tiefziehteil 31 wird in die innere Durchgangsöffnung 50 des Ankers 27 eingeschoben und mit diesem nachfolgend fest verbunden. Die feste Verbindung ist z. B. durch das Anbringen zweier mittels Laser erzielter Schweißnähte 28 vom äußeren Umfang des Ankers 27 aus erreichbar. Die Schweißnähte 28 liegen dabei vorteilhafterweise genau gegenüber und sind nur dort vorgesehen, wo das Tiefziehteil 31 auch an der inneren Wandung des Ankers 27 anliegt, also außerhalb der Sicken 61. Das erfindungsgemäße Verfahren zur Herstellung einer Ventilnadel 18 hat den Vorteil, daß ohne jegliche spanende oder graterzeugende Verfahrensschritte die Ventilnadel 18 erzeugbar ist.
Alle nach dem Tiefziehen notwendigen und hier beschriebenen Verfahrensschritte sind nicht unbedingt zeitlich in der aufgeführten Reihenfolge auszuführen. Vielmehr können die einzelnen Verfahrensschritte zumindest teilweise in einer anderen zeitlichen Reihenfolge bzw. zeitgleich stattfinden.

## Patentansprüche

1. Ventilnadel eines elektromagnetisch betätigbaren Ventils, insbesondere für ein Einspritzventil für Brennstoffeinspritzanlagen von Brennkraftmaschinen, das einen Kern, eine Magnetspule und einen festen Ventilsitz hat, mit dem die aus einem Anker, einem Ventilnadelabschnitt und einem Ventilschließgliedabschnitt bestehende Ventilnadel zusammenwirkt, wobei der Ventilnadelabschnitt den Anker mit dem Ventilschließgliedabschnitt verbindet, dadurch gekennzeichnet, daß zumindest der Ventilnadelabschnitt (19) und der Ventilschließgliedabschnitt (24) der Ventilnadel (18) als ein Teil durch Tiefziehen hergestellt sind.

2. Ventilnadel nach Anspruch 1, dadurch gekennzeichnet, daß der Ventilnadelabschnitt (19) und der Ventilschließgliedabschnitt (24) ein Tiefziehteil (31) bilden, das eine langgestreckte Becherform aufweist, wobei der Ventilnadelabschnitt (19) für sich rohrförmig ist.

3. Ventilnadel nach Anspruch 1 oder 2, dadurch gekennzeichnet, daß der Ventilschließgliedabschnitt (24) die Form einer Halbkugelschale besitzt.

4. Ventilnadel nach Anspruch 2, dadurch gekennzeichnet, daß das Tiefziehteil (31) mittels wenigstens einer Schweißnaht (28) an seinem dem Ventilschließgliedabschnitt (24) abgewandten Ende (20) mit dem Anker (27) verbunden ist.

5. Ventilnadel nach Anspruch 1 oder 2, dadurch gekennzeichnet, daß im Ventilnadelabschnitt (19) an seinem dem Ventilschließgliedabschnitt (24) abgewandten Ende (20) wenigstens eine Sicke (61) vom äußeren Umfang her eingeformt ist.

6. Ventilnadel nach Anspruch 5, dadurch gekennzeichnet, daß die wenigstens eine im Ventilnadelabschnitt (19) vorgesehene Sicke (61) eine V-Form hat und in axialer Richtung langgestreckt ist.

7. Ventilnadel nach Anspruch 4 und 5, dadurch gekennzeichnet, daß bei in einer Durchgangsöffnung (50) des Ankers (27) eingeschobenem Tiefziehteil (31) durch die wenigstens eine Sicke (61) im Inneren des Ankers (27) wenigstens ein axial verlaufender Strömungskanal (63) gebildet ist.

8. Verfahren zur Herstellung einer Ventilnadel, insbesondere einer nach einem der Ansprüche 1 bis 7 ausgebildeten Ventilnadel, die aus einem Anker, einem Ventilnadelabschnitt und einem Ventilschließgliedabschnitt besteht, dadurch gekennzeichnet, daß zunächst in einem ersten Verfahrensschritt ein Rohling aus Blech durch Tiefziehen in eine Becherform gebracht wird, wodurch der Ventilnadelabschnitt (19) und der Ventilschließgliedabschnitt (24) gebildet werden, und danach weitere Verfahrensschritte folgen, die keine zeitliche Reihenfolge festlegen:
- Anbringen von Abflachungen (25) am äußeren Umfang des Ventilschließgliedabschnitts (24) durch Anstauchen oder Prägen,
- Einformen wenigstens einer Sicke (61) an einem dem Ventilschließgliedabschnitt (24) abgewandten Ende (20) des Ventilnadelabschnitts (19),
- Oberflächenbehandlung des Ventilschließgliedabschnitts (24) und
- Schaffen einer festen Verbindung zwischen dem Anker (27) und dem Ventilnadelabschnitt (19).

9. Verfahren nach Anspruch 8, dadurch gekennzeichnet, daß das Einformen der wenigstens einen Sicke (61) mittels eines Prägeverfahrens erfolgt.

10. Verfahren nach Anspruch 8, dadurch gekennzeichnet, daß die Oberflächenbehandlung durch das Aufbringen von Schichten nach dem CVD (chemical vapour deposition)- bzw. PVD (physical vapour deposition)-Verfahren erfolgt.

## Claims

1. Valve needle of an electromagnetically operable valve, in particular for an injection valve for fuel injection systems of internal combustion engines, which has a core, a magnet coil and a fixed valve seat with which the valve needle, comprising an armature, a valve needle section and a valve closing member section co-operates, the valve needle section connecting the armature to the valve closing member section, characterized in that at least the valve needle section (19) and the valve closing member section (24) of the valve needle (18) are produced as one part by deep drawing.

2. Valve needle according to Claim 1, characterized in that the valve needle section (19) and the valve closing member section (24) form a deep-drawn part (31) which has an elongated cup-like shape, the valve needle section (19) being inherently tubular.

3. Valve needle according to Claim 1 or 2, characterized in that the valve closing member section (24) is in the shape of a hemispherical shell.

4. Valve needle according to Claim 2, characterized in that the deep-drawn part (31) is connected to the armature (27) by means of at least one welded seam (28) on its end (20) averted from the valve closing member section (24).

5. Valve needle according to Claim 1 or 2, characterized in that starting from the outer circumference at least one bead (61) is formed in the valve needle section (19) at its end (20) averted from the valve closing member section (24).

6. Valve needle according to Claim 5, characterized in that the at least one bead (61) provided in the valve needle section (19) is in the shape of a V and elongated in the axial direction.

7. Valve needle according to Claims 4 and 5, characterized in that in the case of a deep-drawn part (31) inserted in a through opening (50) in the armature (27) at least one axially extending flow channel (63) is formed by the at least one bead (61) in the interior of the armature (27).

8. Method for producing a valve needle, in particular a valve needle constructed according to one of Claims 1 to 7, which comprises an armature, a valve needle section and a valve closing member section, characterized in that firstly in a first method step a blank made from sheet metal is given the shape of a cup by deep drawing, as a result of which the valve needle section (19) and the valve closing member section (24) are formed, after which there follow further method tens of no fixed temporal sequence:
- producing flats (25) on the outer circumference of the valve closing member section (24) by upsetting or embossing,
- shaping at least one bead (61) on an end (20) of the valve needle section (19) averted from the valve closing member section (24),
- treating the surface of the valve closing member section (24), and
- cleaning a fixed connection between the armature (27) and the valve needle section (19).

9. Method according to Claim 8, characterized in that the at least one bead (61) is shaped by means of an embossing method.

10. Method according to Claim 8, characterized it that the surface is treated by applying layers using the CVD (chemical vapour deposition method or the PVD (physical vapour deposition) method.

## Revendications

1. Aiguille d'une soupape à commande électromagnétique notamment d'un injecteur pour une installation d'injection de carburant d'un moteur à combustion interne comprenant un noyau, une bobine électromagnétique et un siège de soupape fixe avec lequel coopère l'aiguille composée d'un induit, d'un segment d'aiguille et d'un segment d'obturation, le segment d'aiguille reliant l'induit au segment d'obturation,
caractérisée en ce qu'
au moins le segment d'aiguille (19) et le segment d'obturation (24) de l'aiguille (18) sont constitués par une pièce obtenue par emboutissage profond.

2. Aiguille selon la revendication 1,
caractérisée en ce que
le segment d'aiguille (19) et le segment d'obturation (24) forment une pièce (31) obtenue par emboutissage profond, en une forme de gobelet allongé, le segment d'aiguille (19) étant tubulaire.

3. Aiguille selon les revendications 1 ou 2,
caractérisée en ce que
le segment d'obturation (24) a la forme d'une coupelle hémisphérique.

4. Aiguille selon la revendication 2,
caractérisée en ce que
la pièce (31) obtenue par emboutissage profond est reliée par au moins un cordon de soudure (28) à l'induit (27) par son extrémité (20) opposée à celle du segment d'obturation (24).

5. Aiguille selon les revendications 1 ou 2,
caractérisée en ce que
le segment d'aiguille (19) comporte à son extrémité (20) opposée au segment d'obturation (24), au moins une rainure (61) enfoncée dans la périphérie extérieure.

6. Aiguille selon la revendication 5,
caractérisée en ce qu'
au moins la rainure (61) du segment d'aiguille (19) a une section en V et est allongée dans la direction axiale.

7. Aiguille selon les revendications 4 et 5,
caractérisée en ce que
la pièce (31) obtenue par emboutissage profond, engagée dans l'orifice de passage (50) de l'induit (27) forme par au moins sa rainure (61), à l'intérieur de l'induit (27), au moins un canal d'écoulement axial (63).

8. Procédé de fabrication d'une aiguille notamment d'une aiguille comprenant selon les revendications 1 à 7, un induit, un segment d'aiguille, un segment d'obturation,
caractérisé en ce que
dans une première étape, on met une ébauche de tôle sous la forme d'un gobelet par emboutissage profond, en formant le segment d'aiguille (19) et le segment d'obturation (24), puis on effectue plusieurs étapes de procédé sans ordre chronologique fixe :
- réalisation de parties aplaties (25) à la périphérie extérieure du segment d'obturation (24) par refoulement ou matriçage,
- mise en forme d'au moins une rainure (61) à l'extrémité (20) du segment d'aiguille (19) du côté opposé à celle du segment d'obturation (24),
- traitement de surface du segment d'obturation (24) et,
- réalisation d'une liaison solidaire entre l'induit (27) et le segment d'aiguille (19).

9. Procédé selon la revendication 8,
caractérisé en ce qu'
on réalise par formage au moins une rainure (61) par un procédé de matriçage.

10. Procédé selon la revendication 8,
caractérisé en ce que
le traitement de surface consiste à appliquer des couches selon le procédé CVD (dépôt chimique à la vapeur) ou PVD (dépôt physique à la vapeur).
